# EUROPÄISCHE PATENTANMELDUNG

(11) **EP 4 841 144 A1**
(43) Veröffentlichungstag der Anmeldung: **18.11.2026**
(21) Anmeldenummer: 26178209.8
(22) Anmeldetag: 12.05.2026
(51) Int. Cl.: F16L 13/14, A62C 2/06

(54) **FUNKTIONSELEMENT MIT INTUMESZIERENDEM MATERIAL**

(30) Priorität: 13.05.2025 DE 102025118413
(71) Anmelder: Viega Technology GmbH & Co. KG, 57439 Attendorn (DE)
(72) Erfinder: Hoffmann, Nils, 57439 Attendorn (DE); Schauerte, Bastian, 57439 Attendorn (DE); Pace, Mario, 57368 Lennestadt (DE)
(74) Vertreter: Cohausz & Florack

(57) **Zusammenfassung**

Die Erfindung betrifft ein Funktionselement (2) für das Abdichten eines Bauteils (20) bei Temperaturanstieg, mit einem Basiskörper (26), wobei der Basiskörper (26) einen Funktionsabschnitt (40) umfasst oder daraus besteht, wobei der Funktionsabschnitt (40) einen Werkstoff umfasst, wobei der Werkstoff ein intumeszierendes Material und ein thermoplastisches Polymer umfasst, wobei das thermoplastische Polymer vernetzt ist. Die Erfindung betrifft weiterhin die Verwendung eines Werkstoffs umfassend ein vernetztes thermoplastisches Polymer und ein intumeszierendes Material in einem Funktionselement (2) für ein Bauteil (20) zum Abdichten des Bauteils (20) im Brandfall.

## Beschreibung

Die vorliegende Erfindung betrifft ein Funktionselement für das Abdichten eines Bauteils bei Temperaturanstieg, mit einem Basiskörper aus einem Werkstoff, wobei der Werkstoff ein intumeszierendes Material und ein thermoplastisches Polymer umfasst.

Der für die vorliegende Erfindung relevante technische Bereich ist die baustellenseitige Installation von Rohrleitungssystemen, bei der allgemein für das Leiten und Führen eines Fluids, also einer Flüssigkeit oder eines Gases, ein aus Rohrabschnitten und Fittings bestehendes Rohrleitungssystem installiert wird. Als Fitting wird grundsätzlich ein Verbindungsstück für eine Rohrleitung verstanden, und ein Fitting wird am häufigsten zur Verbindung von zwei oder mehreren Rohrabschnitten eingesetzt. Das Fitting weist dementsprechend bevorzugt zwei oder mehr Pressabschnitte beispielsweise in Form von Presshülsen auf. Zu den häufigsten Fittings zählen gerade Verbindungen, Richtungswechsel in Form von Rohrbögen, Reduzierstücke, Abzweige wie T-Stücke oder Kreuzungen. Unter einem Fitting ist aber auch ein Rohranschluss einer Armatur oder einer sonstigen Komponente zu verstehen. Beispielsweise weisen Thermometer oder Manometer als Armaturen nur einen Anschluss für einen Rohrabschnitt auf. Somit weist das Fitting einer Armatur nur einen Pressabschnitt auf, um einen Rohrabschnitt an der Armatur anzuschließen.

Für das Verbinden der Rohrabschnitte mit den Fittings und sonstigen Komponenten werden Pressverbindungen genutzt, bei denen ein Pressabschnitt eines Fittings bei eingestecktem Rohrabschnitt mittels einer Pressbacke radial nach innen so umgeformt wird, dass eine dauerhafte und dichte, gegebenenfalls sogar unlösbare Verbindung hergestellt wird. Die Fittings können dabei mit einem Dichtungsmittel, beispielsweise mit einem O-Ring, versehen sein, das die Dichtheit der Verbindung gewährleistet, oder auch mittels eines direkten Kontakts der Materialien des Rohrabschnitts und des Fittings, beispielweise metallisch dichtend, ausgebildet sein.

Als Presstechnik für ein radiales Umformen des Pressabschnittes kommen vorwiegend radial wirkende Presssysteme als auch Presssysteme in Frage, die ein radial-axiales Verpressen nutzen, wobei während des Pressvorgangs ein Teil des Fittings axial verschoben wird, um dadurch ein radiales Umformen zu bewirken.

Die zuvor allgemein beschriebenen Rohrleitungssysteme dienen insbesondere einem Transport von Trink- oder Heizungswasser, von Gas zum Betrieb einer Heizungsanlage oder von Industriegasen. Grundsätzlich kann jedes fluide Medium in den Rohrleitungen transportiert werden.

Bei Pressfittings wird unterschieden, ob ein Rohr beim Verpressen von außen abgedichtet und fixiert wird oder ob zumindest ein Teil des Fittings, beispielsweise in Form einer Stützhülse, von innen das abzudichtende Rohr stabilisiert. Die vorliegende Erfindung betrifft insbesondere die Art von Fittings, bei denen das Rohr von außen abgedichtet und fixiert wird. Das schließt grundsätzlich nicht aus, dass auch innerhalb des Rohres eine Komponente des Fittings angeordnet wird, in der Regel ist das aber nicht der Fall. Darüber hinaus kann die vorliegende Erfindung auch für von innen abzudichtende Rohre verwendet werden.

Als Materialien für von außen abzudichtende Rohre, beispielsweise starre Rohre, werden bevorzugt feste Werkstoffe eingesetzt. Als Materialien kommen hierfür insbesondere metallische Werkstoffe in Frage, beispielsweise Edelstähle wie ferritische Stähle wie 1.4520, 1.4521, austenitische Stähle wie 1.4404, Duplex-Stähle wie 1.4462, Kupferbasislegierungen wie Messinge, Rotguss, Siliziumbronze und reines Kupfer.

Als feste Werkstoffe kommen auch nicht-metallischen Werkstoffe wie beispielsweise Kunststoffe in Frage, wenn der nicht-metallische Werkstoff bzw. Kunststoff ausreichende Eigenschaften für ein Verpressen und dauerhaftes Verbinden mit Rohren ermöglicht. Als Werkstoffe kommen hier beispielsweise die folgenden Stoffe in Frage: Polyethylen (PE), insbesondere vernetztes Polyethylen (PE-X), Peroxid-vernetztes Polyethylen (PE-Xa), Silan-vernetztes Polyethylen (PE-Xb) oder physikalisch vernetztes Polyethylen (PE-Xc), Polyethylen erhöhter Temperaturbeständigkeit (PE-RT), Polyvinylchlorid (PVC), Polypropylen (PP) bei entsprechenden Wandstärken, Polyphenylsulfon (PPSU), Polyaryletherketon (PAEK), insbesondere Polyetheretherketon (PEEK), Polyamid (PA), insbesondere aliphatisches biobasiertes Polyamid, beispielsweise PA410, PA12, PA12-GF30, PA11, PA610, PA66, PA6, PA1010, oder Polypropylen-Random-Copolymer mit modifizierter Kristallstruktur und erhöhter Temperaturbeständigkeit (PP-RCT). Des Weiteren können Mehrschichtverbundrohre ausreichend starr für eine Abdichtung von außen ausgeführt sein, beispielsweise über eine dickere Aluminium-Lage, ebenso können auch faserverstärkte Rohre eingesetzt werden.

Unter einem starren Rohr wird im Rahmen dieser Anmeldung ein Rohr verstanden, das mit einem außen abdichtenden Fitting verbunden wird. Die Festigkeit des Materials des Rohrs reicht dabei aus, dass die durch das Fitting von außen einwirkenden Kräfte zwar eine dauerhafte Abdichtung ermöglichen, jedoch das starre Rohr nicht oder nur so wenig verformen, so dass die Verbindung stabil und dicht bleibt.

Fittings zum Pressverbinden mit einem Rohr, insbesondere einem von außen abzudichtenden Rohr, beispielsweise einem starren Rohr, können verschiedene Ausgestaltungen aufweisen. Ein Funktionselement kann innen im Fitting vorgesehen sein, es können zudem weitere Fixierelemente vorgesehen sein. Funktionselement und optional Fixierelemente können vor und nach dem Verpressen das Rohr in der erforderlichen Position relativ zum Fitting fixieren und/oder das Rohr entgegen der Auszugsrichtung im Fitting halten. Das Funktionselement ist somit bevorzugt als Halteelement einsetzbar. Weiter kann das Funktionselement als Distanzelement alternativ oder zusätzlich funktional als Abstandshalter zwischen weiteren innen im Fitting vorgesehenen Elementen dienen. Darüber hinaus kann das Funktionselement alternativ oder zusätzlich auch die Funktion eines Dichtelements erfüllen und vorhandene Spalte zwischen weiteren Elementen des Fittings und/oder der Anordnung zum Pressverbinden abdichten. Weiter kann neben dem Funktionselement ein Dichtelement, in der Regel ein Dichtungsring, beispielsweise ein O-Ring, zum Abdichten des Fittings gegenüber der Rohraußenseite vorgesehen sein.

Das optionale Dichtelement liegt im verpressten Zustand spaltfrei an der Presshülse und dem einzuschiebenden Rohr an, da es im Bereich des Anschlagelements angeordnet ist, also dort, wo das eingeschobene Rohr anliegt und endet. Die Spaltfreiheit dient neben dem Herstellen einer verbesserten Dichtigkeit der Verbindung zudem einer verbesserten Hygiene, da Toträume und stagnationsbehaftete Bereiche vermieden werden. Abhängig von der weiteren Ausgestaltung des Fittings, kann auch mit einer pressverbundenen Anordnung aus Rohr und Fitting ohne Dichtelement eine zuverlässige Abdichtung erreicht werden.

Die Sicherung des Rohres gegen Auszug und/oder gegen zu hohen Innendruck erfolgt bevorzugt über ein als Halteelement dienendes Funktionselement, wobei die Innenfläche des Basiskörpers entsprechend zum Halten und/oder Fixieren des Rohrs ausgebildet ist. Der Basiskörper des Funktionselements ist bevorzugt im Wesentlichen hohlzylindrisch, kann also beispielsweise als Ring ausgebildet sein, dessen äußere Kontur an die Innenseite des Grundkörpers des Fittings angepasst ist. Es ist auch möglich, dass der Basiskörper einstückig ausgeführt oder aus mehreren Elementen zusammengesetzt ausgeführt ist.

Nach dem Pressverbinden des Fittings mit dem Rohr kann eine zuverlässige Abdichtung erreicht werden, so dass unter Druck stehende Fluide verlustfrei durch die pressverbundene Anordnung aus Rohr und Fitting geleitet werden können.

Handelt es sich bei dem unter Druck stehendem Fluid um ein Gas, ist es aus Sicherheitsgründen notwendig, eine gasbeständige Abdichtung zu erreichen, die auch bei hohen Temperaturen eine im Wesentlichen verlustfreie Durchleitung des Gases durch die pressverbundene Anordnung aus Rohr und Fitting ermöglicht. So wird von einer Gasinstallation gefordert, dass diese HTB-beständig ist. Der Begriff Höhere Thermische Belastbarkeit (HTB) erfordert, dass eine Gasinstallation, beispielsweise eine gasführende Rohrleitung, zum Beispiel einer Temperatureinwirkung von 650 °C über einen Zeitraum von 30 Minuten standhalten kann. Die Temperaturanforderung ist dabei abhängig von den jeweils einschlägigen Richtlinien (z.B. europäische Norm EN 1775:2007 und Deutsches Regelwerk DVGW G 5614), beispielsweise von den EU-Richtlinien in Mitgliedsstaaten der EU. Somit kann verhindert werden, dass von der Gasinstallation im Brandfall eine Explosionsgefahr ausgeht, sofern die Explosionsgefahr nicht durch alternative Schutzmaßnahmen verhindert wird. Im Rahmen einer HTB-Prüfung einer Anordnung aus einem mit einem Rohr pressverbundenen Fitting wird die Anordnung zum Beispiel für 30 Minuten einer Temperatur von 650 °C ausgesetzt und unter einem bestimmten Innendruck die Leckrate gemessen, die einen gewissen Wert nicht überschreiten darf. Beständigkeit bei hohen Temperaturen ist darüber hinaus auch für andere Fluide als Gas notwendig oder zumindest von Vorteil, so dass eine HTB-beständige Installation generell für Fluid-führende Rohrleitungssysteme zu bevorzugen ist.

Die HTB-Beständigkeit ist insbesondere bei Kombinationen von Fittings und Rohren, bei denen Werkstoffkombinationen mit unterschiedlichen thermischen Ausdehnungskoeffizienten verwendet werden, beispielsweise einer Pressverbindung mit einem Fitting aus einem ferritischen Stahl, beispielsweise 1.4521, und einem Rohr aus einem austenitischen Stahl, beispielsweise 1.4404, problematisch. Denn bei der Verwendung von Werkstoffkombinationen mit unterschiedlichen thermischen Ausdehnungskoeffizienten ergeben sich bei einer Temperaturerhöhung, beispielsweise durch die Aufheizung bei der HTB-Prüfung, vergrößerte Spalte zwischen Rohr und Fitting, die zu mangelnder oder grenzwertiger Dichtigkeit der Pressverbindung führen können. Aber auch bei werkstoffreinen Kombinationen von Rohr und Fitting, beispielsweise bei einer Pressverbindung mit einem Fitting und einem Rohr aus einem austenitischen Stahl, beispielsweise 1.4404, können bei Aufheizen der Pressverbindung vergrößerte Spalte und daraus resultierend eine mangelnde Dichtigkeit der Pressverbindung auftreten. Insbesondere problematisch bei Temperaturerhöhung einer Pressverbindung mit einem Dichtelement, welches oft aus Gummi, beispielsweise HNBR ("hydrogenated nitrile-butadiene rubber" - Hydrierter Acrylnitrilbutadien-Kautschuk), besteht, ist, dass das Dichtelement vollständig zerstört werden und somit nicht mehr für eine Abdichtung sorgen kann. Dies ist insbesondere problematisch bei Temperaturen von bis zu 650 °C, wie sie bei der HTB-Prüfung beispielsweise vorliegen.

Bei bestehenden Anordnungen zum Pressverbinden aus Fitting und Rohr wird oft ein Zusatzbauteil verwendet, das, beispielsweise durch Ausdehnung, die bei der HTB-Prüfung entstehenden Spalte füllen und damit abdichten soll. Nachteilig an dieser Lösung ist, dass das Zusatzbauteil als zusätzliches Bauteil in eine Anordnung zum Pressverbinden aus Fitting und Rohr eingebracht werden muss. Dies bringt zum einen einen erhöhten Platzbedarf innerhalb des Fittings, beispielsweise in der Kammer des Fittings, mit sich. Zum anderen wird durch das Bereitstellen eines zusätzlichen Bauteils der Produktionsaufwand erhöht.

Des Weiteren sind aus dem Stand der Technik intumeszierende Materialien bekannt, beispielsweise intumeszenzbasierte Additive, die sich unter Temperaturerhöhung um ein Vielfaches ihres Volumens ausdehnen oder aufschäumen und so zur Abdichtung dienen oder beitragen können. Intumeszenz bezeichnet dabei allgemein die Eigenschaft eines Stoffes, bei einer Temperaturerhöhung ein Ausdehnen oder ein Anschwellen zu erfahren. Intumeszenz ist also eine Volumenzunahme eines festen Körpers ohne chemische Umwandlung bei Anwendung von Wärmeenergie. Aufgeschäumte intumeszenzbasierte Additive sind hitzebeständig und verlangsamen oder verhindern den Durchtritt von Wärmeenergie durch das mit dem intumeszenzbasiertem Additiv versehene Material hindurch.

Intumeszierende Materialien zeichnen sich dadurch aus, dass sie ab einer bestimmten Temperatur, welche in der Regel zwischen 200 und 350 °C liegt, beginnen zu expandieren. Sie finden Verwendung als Dichtungen, beispielsweise als Dichtungsstreifen in Gebäuden, oder werden in Form einer Paste, beispielsweise in Form einer flammhemmenden Schicht, verwendet. Im Brandfall übernehmen intumeszierende Materialien die wichtige Funktion, Hohlräume, Spalten und Fugen, die sich durch Ausdehnung der unterschiedlichen Bestandteile des Bauteils oder eines Gebäudes ergeben können, abzudichten. Anders als flammhemmend ausgerüstete Kunststoffteile haben solche intumeszierende Materialien in der Regel allerdings keine Funktion außerhalb eines Brandfalls verbunden mit einer Temperaturerhöhung des Bauteils, in dem das Material eingesetzt ist. Zusätzlich ist der Einsatz von intumeszierenden Materialien bisher auf wenige Bereiche beschränkt.

Weiter ist im Stand der Technik der Einsatz von Bauteilen umfassend intumeszierende Materialien bekannt, die thermoplastische Polymere mit einer Verarbeitungstemperatur unterhalb der Auslösetemperatur der intumeszierenden Komponenten umfassen. Thermoplastische Polymere sind Kunststoffe, die sich in einem bestimmten Temperaturbereich reversibel verformen lassen. Die intermolekularen Kräfte, welche die Polymerketten verbinden, werden bei steigender Temperatur schnell schwächer, wodurch eine viskose Flüssigkeit entsteht. Bei derartigen Bauteilen wird somit die Schmelztemperatur der thermoplastischen Polymere erreicht, bevor die intumeszierende Komponente zu expandieren beginnt. In einem Rohrleitungssystem führt im Fall eines Temperaturanstiegs, beispielsweise durch einen Brandfall, der Medieninnendruck des Rohrleitungssystems folglich dazu, dass das thermoplastische Polymer eine Thermoplastschmelze bildet, die aufgrund der wirkenden Scherkräfte zusammen mit dem intumeszierenden Material aus dem Verbindungsstück herausgetragen wird, bevor das intumeszierende Material auslösen kann. Dies verringert die beabsichtigte Dichtwirkung im Brandfall.

Durch pyrolytische Zersetzung der thermoplastischen Polymere bei Temperaturen, wie sie im Brandfall erreicht werden, entsteht darüber hinaus ein Materialverlust sowie auch eine Viskositätserniedrigung der Thermoplastschmelze, wodurch der zuvor genannte Effekt der verringerten Dichtwirkung noch verstärkt wird. Derartige Rohrleitungssysteme zeigen somit mangelnde Dichtigkeit in der HTB-Prüfung.

Auch der Einsatz von Elastomeren in intumeszierenden Bauteilen ist bekannt. Im Brandfall sind Elastomere jedoch noch weniger als thermoplastische Polymere geeignet, um dem gestiegenen Medieninnendruck des Rohleitungssystems zu widerstehen, bis das intumeszierende Material auslöst.

Vor dem Hintergrund der oben beschriebenen Nachteile des Stands der Technik liegt der vorliegenden Erfindung das technische Problem zugrunde, ein Funktionselement zu entwickeln, durch das auch bei hohen Temperaturen eine weitgehende Abdichtung eines Bauteils erreicht wird.

Dieses technische Problem wird bei einem Funktionselement für das Abdichten eines Bauteils bei Temperaturanstieg, mit einem Basiskörper, wobei der Basiskörper einen Funktionsabschnitt umfasst oder daraus besteht, wobei der Funktionsabschnitt einen Werkstoff umfasst, wobei der Werkstoff ein intumeszierendes Material und ein thermoplastisches Polymer umfasst, erfindungsgemäß dadurch gelöst, dass das thermoplastische Polymer vernetzt ist. Das intumeszierende Material kann in dem als Matrixmaterial dienenden vernetzten thermoplastischen Polymer verteilt sein. Vorzugsweise besteht der Funktionsabschnitt aus dem Werkstoff. Der Funktionsabschnitt kann beispielsweise ein Kranz oder eine Beschichtung sein. Der Basiskörper kann mehr als einen Funktionsabschnitt, beispielsweise zwei oder drei Funktionsabschnitte, umfassen. Beispielsweise kann ein ringförmiger Basiskörper zwei schmale Kränze an seinen Enden umfassen.

Des Weiteren wird das technische Problem durch die Verwendung eines Werkstoffs umfassend ein vernetztes thermoplastisches Polymer und ein intumeszierendes Material in einem Funktionselement für ein Bauteil zum Abdichten des Bauteils im Brandfall gelöst. Das Funktionselement kann teilweise oder vollständig aus dem Werkstoff bestehen. Das Funktionselement kann einen Funktionsabschnitt aufweisen, der den Werkstoff umfasst oder daraus besteht.

Durch das erfindungsgemäße Funktionselement kann auf ein Zusatzelement zur Abdichtung im Brandfall verzichtet und gleichzeitig ein Austreten von Gasen oder anderen Medien vermieden werden. Insbesondere bei Bauteilen, bei denen Materialien mit unterschiedlichen thermischen Ausdehnungskoeffizienten vorhanden sind, wird so eine HTB-Beständigkeit erreicht.

Das erfindungsgemäße Funktionselement weist einen Basiskörper umfassend einen Funktionsabschnitt auf, an dem optional weitere Elemente angeordnet sein können, um die entsprechend geforderte Funktion des Funktionselements zu erfüllen. Beispielsweise können Elemente vorhanden sein, die einer Funktion des Funktionselements als Halteelement zukommen, beispielsweise Fixierelemente zum Fixieren des Rohres, die das einzuführende Rohr führen und halten. Weiterhin können Elemente vorgesehen sein, die eine Funktion des Funktionselements als Distanzelement oder Dichtelement unterstützen, beispielsweise Elemente aus einem im Vergleich zum restlichen Basiskörper weichen Material, die einer Abdichtung dienen.

Durch die erfindungsgemäße Ausbildung des Basiskörpers umfassend einen Funktionsabschnitt, wobei der Funktionsabschnitt einen Werkstoff umfasst, wobei der Werkstoff ein intumeszierendes Material umfasst, kann eine Ausdehnung des Funktionselements in Teilen oder als Ganzes im Brandfall unter Hitzeeinwirkung um ein Vielfaches seines Volumens erreicht werden. So kann das Funktionselement oder Abschnitt davon Spalte, die in einem Bauteil durch Hitzeeinwirkung entstehen, sicher verschließen und eine Abdichtung auch im Brandfall gewährleisten. In vorteilhafter Weise kann das Funktionselement somit im Zusammenhang mit Werkstoffen, die unterschiedliche thermische Ausdehnungskoeffizienten aufweisen, verwendet werden.

Wie oben erwähnt, liegt ein besonderer Nachteil der Verwendung von thermoplastischen Polymeren in einem Funktionselement darin, dass die Schmelztemperatur der thermoplastischen Polymere erreicht wird, bevor die intumeszierende Komponente zu expandieren beginnt, und somit die entstandene Thermoplastschmelze mit dem intumeszierenden Material aus dem Verbindungsstück herausgetragen wird, bevor das intumeszierende Material auslösen kann. Ohne an eine wissenschaftliche Theorie gebunden sein zu wollen, scheinen vernetzte thermoplastische Polymere hingegen oberhalb ihrer Schmelztemperatur ein Gel auszubilden. Im Brandfall scheint sich anstatt einer Thermoplastschmelze aufgrund der Vernetzung des thermoplastischen Polymers ein orttreues Gel zu bilden, das dem Medieninnendruck lange genug widersteht, sodass die intumeszierende Komponente zielgerichtet und vollständig am Bedarfsort ausgelöst werden und zur Abdichtung im Volumen zunehmen kann. Aufgrund dieser Gelstruktur scheint zudem die bereits erwähnte Viskositätserniedrigung durch pyrolytische Zersetzung des thermoplastischen Polymers verzögert zu werden, wodurch die Dichtigkeit während des Brandes weiter verlängert wird.

Ferner weisen Funktionselemente umfassend vernetzte thermoplastische Polymere insbesondere gegenüber Funktionselementen umfassend Elastomere den Vorteil auf, dass Elastomerteile über lange Zeit vernetzt werden, nachdem sie durch Spritzguss oder Pressen in Form gebracht wurden. Hieran schließt sich meist eine Temperung über mehrere Stunden bei wiederum hohen Temperaturen an, um die erwünschte Qualität für auf 50 Jahre Lebenszeit ausgelegte Dichtungen zu erhalten. Die erfindungsgemäßen Funktionselemente werden geringer thermisch beansprucht, sind schneller (und günstiger) herzustellen und leichter zu montieren.

Im Folgenden werden verschiedene Ausführungsformen des Funktionselements beschrieben, wobei die einzelnen Ausführungsformen zudem jeweils untereinander kombiniert werden können.

Gemäß einer bevorzugten Ausführungsform ist das Funktionselement derart ausgebildet, dass durch das Bauteil auf das Funktionselement im eingebauten und/oder in Betrieb befindlichen Zustand anisotrope Kräfte wirken. Bei den anisotropen Kräften kann es sich beispielsweise um Scher- und/oder Reibungskräfte handeln, die auf das Funktionselement im eingebauten und/oder in Betrieb befindlichen Zustand wirken. Insbesondere können die Reibungskräfte zwischen dem Funktionselement und dem Bauteil vorliegen. Insbesondere kann durch die anisotropen Kräfte auf das Funktionselement eine Scherkraft wirken. Die Scherkraft ist insbesondere die Folge der Einbausituation des Funktionselements in einem Rohrleitungssystem und dem Innendruck in einem Rohrleitungssystem durch ein darin geführtes Medium. Im kalten (festen) Zustand ist die Scherkraft unkritisch. In einem Brandfall wird durch die Scherkraft eine nicht vernetzte Thermoplastschmelze zum Fließen gebracht, insbesondere aufgrund von dynamischer Viskosität und Viskositätserniedrigung durch Scherung.

Vorzugsweise ist das Bauteil dazu ausgelegt, ein Fluid, insbesondere ein Gas zu leiten, das vorzugsweise eine Kraft auf eine mit dem Fluid in Kontakt stehende Seite des Bauteils ausübt. Beispielsweise kann das Fluid eine Kraft auf eine Innenseite des Bauteils ausüben. Auch durch das Fluid können anisotrope Kräfte auf das Bauteil und auf das Funktionselement, insbesondere auf den Funktionsabschnitt, wirken. Insbesondere ist das Bauteil für Rohrleitungen für den Transport von Gas zum Betrieb einer Heizungsanlage oder von Industriegasen ausgelegt. Grundsätzlich kann jedoch jedes fluide Medium in das erfindungsgemäße Bauteil umfassenden Rohrleitungen transportiert werden.

Weiterhin kann gemäß einer bevorzugten Ausführungsform durch das Bauteil der Betrag der auf das Funktionselement im eingebauten und/oder in Betrieb befindlichen Zustand wirkenden anisotropen Kräfte größer sein als der Betrag der auf das Bauteil wirkenden Gravitationskraft. Insbesondere wirken im eingebauten und/oder in Betrieb befindlichen Zustand die anisotropen Kräfte durch das Bauteil auf das Funktionselement zusätzlich zu der Gravitationskraft des Bauteils. Vorzugsweise wird die Gravitationskraft bei den durch das Bauteil auf das Funktionselement im eingebauten und/oder in Betrieb befindlichen Zustand wirkenden anisotropen Kräften nicht berücksichtigt. Wie bereits erwähnt kann es sich bei den anisotropen Kräften beispielsweise um Scher- und/oder Reibungskräfte handeln, die auf das Funktionselement im eingebauten und/oder in Betrieb befindlichen Zustand wirken.

Gemäß einer bevorzugten Ausführungsform ergibt sich durch die durch das Bauteil auf das Funktionselement im eingebauten und/oder in Betrieb befindlichen Zustand wirkenden anisotropen Kräfte ein resultierender Kraftvektor, der ungleich null ist. Ein Teil der anisotropen Kräfte, die den resultierenden Kraftvektor bilden, kann auch ein Fluid sein, das durch das Bauteil geleitet wird.

Weiterhin ist es bevorzugt, dass durch die anisotropen Kräfte auf das Funktionselement, insbesondere den Funktionsabschnitt, im eingebauten und/oder in Betrieb befindlichen Zustand zumindest eine Scherkraft wirkt.

Gemäß einer bevorzugten Ausführungsform ist das thermoplastische Polymer Polyethylen und/oder der Werkstoff umfasst vernetztes Polyethylen. Das im Werkstoff umfasste vernetzte thermoplastische Polymer ist demnach vernetztes Polyethylen. Mit anderen Worten, der Funktionsabschnitt des Basiskörpers oder der Basiskörper als Ganzes ist demnach vorzugsweise aus einem Werkstoff, der ein intumeszierendes Material und vernetztes Polyethylen umfasst. Durch einen dreidimensionalen Vernetzungsvorgang werden bei der Herstellung von vernetztem Polyethylen irreversibel feste Verknüpfungen zwischen den Makromolekülen des Polyethylens ausgebildet. Die drei gebräuchlichsten Verfahren für die Vernetzung sind die peroxidische Vernetzung nach dem Engel-Verfahren (PE-Xa, chemische Vernetzung), die Silanvernetzung (PE-Xb, chemische Vernetzung) und die Elektronenstrahlvernetzung (PE-Xc, physikalische Vernetzung). Daneben ist die Azo-Vernetzung als weitere chemische Vernetzungstechnik (PE-Xd) bekannt. Besonders bevorzugt ist das im Werkstoff umfasste vernetzte thermoplastische Polymer PE-Xb.

Das zur Herstellung der vernetzten Polyethylene verwendete Polyethylen (PE) kann dabei LLDPE, MDPE, HDPE oder Blends davon sein.

Ohne an eine wissenschaftliche Theorie gebunden sein zu wollen, scheint es, dass die Vernetzungsstruktur des Polymers, insbesondere des vernetzten Polyethylens, den durch den Medieninnendruck innerhalb des Rohrleitungssystems auftretenden Scherkräften, die im Brandfall auf die entstehende Thermoplastschmelze einwirken, ausreichende Kräfte entgegensetzen kann. Diese Kräfte können ein weiteres Fließen der Thermoplastschmelze verhindern, sodass sowohl die Thermoplastschmelze als auch das intumeszierende Material ortstreu bleiben und das intumeszierende Material am gewünschten Ort auslöst. Ein Austrag des thermoplastischen Polymers und des intumeszierenden Materials durch den Medieninnendruck im Brandfall wird somit verhindert. Polyethylen hat ferner den Vorteil, dass es eine hohe Beständigkeit gegenüber einer Vielzahl von Fluiden und anderen Agenzien aufweist. Ferner ist die Verarbeitung von Polyethylen etabliert.

Gemäß einer Ausführungsform weist das im Werkstoff umfasste vernetzte thermoplastische Polymer einen Formgedächtniseffekt auf. Bevorzugt wird ein solches vernetztes thermoplastisches Polymer mit Formgedächtnis im gestreckten Zustand montiert.

Ohne an eine wissenschaftliche Theorie gebunden sein zu wollen, scheint es, dass durch die Montage eines vernetzten thermoplastischen Polymers mit Formgedächtnis im gestreckten Zustand in einem Funktionselement eine verbesserte Abdichtung des Bauteils bei Temperaturanstieg erreicht werden kann. Beim Einbau des gestreckten vernetzten thermoplastischen Polymers wird dieses aus der ursprünglichen gestreckten Form deformiert. Aufgrund des Formgedächtnisses unterliegt das eingebaute vernetzte thermoplastische Polymer einer Triebkraft zur Expansion, um die ursprüngliche gestreckte Form wieder einzunehmen. Bei Temperaturanstieg kann dadurch in einem Bauteil mit einem erfindungsgemäßen Funktionselement eine zusätzlich abdichtende Wirkung erzielt werden, da sich das durch die initiale Erhitzung mobilisierte vernetzte thermoplastische Polymer an die Wandungen des Bauteils presst.

Verschiedene Materialien kommen als intumeszierendes Material in Frage. Zweckmäßigerweise ist das intumeszierende Material ausgewählt aus der Gruppe bestehend aus Blähgraphit, aktivierte Melaminphyrophosphate, aktivierte Melaminpolyphosphate, aktivierte Ethylendiaminphosphate, aktivierte Ammoniumpolyphosphate, Melamin, Melaminphosphat, nicht aktivierte Melaminpyrophosphate, nicht aktivierte Melaminpolyphosphate, Melamincyanurate, Alkalisilikate, Alkalialumosilikate, Alkalimagnesiumsilikate, Phosphate, phosphathaltige Silikate bzw. Aluminate, anorganische Borverbindungen, Kohlenhydrate, wie z.B. Mono-, Di- oder Polysacharide wie Zucker, Stärke, Cellulose, Materialien mit gebundenem Kristallwasser, wie beispielsweise Vermiculite und Mischungen davon. Kohlenhydrate wirken ggf. mit Salzen starker anorganischer Säuren, beispielsweise Phosphorsäure oder Schwefelsäure, zusammen. Gemäß einer weiteren bevorzugten Ausführungsform ist das intumeszierende Material Blähgraphit. Blähgraphit wird bevorzugt durch chemische Behandlung von Graphit hergestellt, wobei Graphit mit Substanzen behandelt wird und diese in die Gitterstruktur des Graphits eingelagert werden, wodurch die Schichtabstände der Graphitschichten aufgeweitet werden. Ein so vorbehandelter Graphit dehnt sich bei Hitzeeinwirkung aus und vervielfacht dabei sein Volumen. Bevorzugte Substanzen sind beispielsweise starke Säuren, insbesondere Mineralsäuren, beispielsweise Schwefelsäure oder Salpetersäure und/oder Oxidationsmittel, wie Wasserstoffperoxid oder Kaliumpermanganat.

Vorteilhafterweise enthält der Werkstoff das intumeszierende Material in einer Menge von 10 bis 45 Gew.-%, vorzugsweise 15 bis 40 Gew.-%, weiter bevorzugt 20 bis 35 Gew.-%, besonders bevorzugt 25 bis 30 Gew.-%, bezogen auf das Gesamtgewicht des Werkstoffs. Ein derartiger Anteil ist besonders effektiv zur Abdichtung im Brandfall. Es hat sich herausgestellt, dass bei einem solchen Anteil an intumeszierendem Material von 10 bis 35 Gew.-%, bevorzugt 15 bis 30 Gew.-%, das Funktionselement effektiv die Explosionsgefahr von gasführenden Rohrleitungen vermindern kann, indem es die gasführenden Rohrleitungen abdichtet, insbesondere bei zufriedenstellendem Halte-/Fixierverhalten.

Gemäß einer bevorzugten Ausführungsform ist das Bauteil eine Pressverbindung, insbesondere ein Pressfitting. Durch Pressverbinden kann eine zuverlässige Abdichtung erreicht werden, so dass unter Druck stehende Fluide verlustfrei durch die pressverbundene Anordnung aus Rohr und Fitting geleitet werden können.

Vorzugsweise ist das Funktionselement ein Klemmelement, ein Dichtungselement oder ein Halteelement. Ein Klemmelement dient der Sicherung des Rohres gegen Auszug und/oder zu hohen Innendruck, indem es durch punktuelle Verformung des Rohrs die Auszugskraft aufnimmt. Ein Dichtungselement dichtet Spalte zwischen weiteren Elementen des Fittings und/oder der Anordnung zum Pressverbinden ab. Ein Halteelement fixiert vor und nach dem Verpressen das Rohr in der erforderlichen Position relativ zum Fitting und/oder hält das Rohr entgegen der Auszugsrichtung im Fitting.

Wird das Funktionselement in Verbindung mit einem Rohr verwendet, kommen für das Rohr verschiedene Werkstoffe, insbesondere metallische und nicht-metallische Werkstoffe in Frage. Beispiele für metallische Werkstoffe sind Edelstähle wie ferritische Stähle wie 1.4520, 1.4521, austenitische Stähle wie 1.4404, Duplex-Stähle wie 1.4462, Kupferbasislegierungen wie Messinge, Rotguss, Siliziumbronze und reines Kupfer. Beispiele für nicht-metallische Werkstoffe sind Polyethylen (PE), insbesondere vernetztes Polyethylen (PE-X), Peroxid-vernetztes Polyethylen (PE-Xa), Silan-vernetztes Polyethylen (PE-Xb) oder physikalisch vernetztes Polyethylen (PE-Xc), Polyethylen erhöhter Temperaturbeständigkeit (PE-RT), Polyvinylchlorid (PVC), Polypropylen (PP) bei entsprechenden Wandstärken, Polyphenylsulfon (PPSU), Polyaryletherketon (PAEK), insbesondere Polyetheretherketon (PEEK), Polyamid (PA), insbesondere aliphatisches biobasiertes Polyamid, beispielsweise PA410, PA12, PA12-GF30, PA11, PA610, PA66, PA6, PA1010, oder Polypropylen-Random-Copolymer mit modifizierter Kristallstruktur und erhöhter Temperaturbeständigkeit (PP-RCT).

Die Erfindung betrifft ferner ein Fitting umfassend ein hierin beschriebenes Funktionselement. Ein Fitting kann insbesondere zur Verbindung von Rohren verwendet werden.

Die Erfindung betrifft ferner ein System zum Erstellen einer Leitungsverbindung mit einem Rohr, insbesondere einem Verbundrohr, und mit einem hierin beschriebenen Funktionselement. Vorzugsweise weist das erfindungsgemäße System ein hierin beschriebenes Fitting auf.

Die Erfindung betrifft schließlich die Verwendung eines hierin beschriebenen Funktionselements oder eines hierin beschriebenen Fittings oder eines hierin beschriebenen Systems in einer ein Fluid, insbesondere ein Gas, führenden Leitungsanordnung.

Im Folgenden wird die Erfindung anhand von Ausführungsbeispielen mit Bezug auf die Zeichnung erläutert. In der Zeichnung zeigen
- Fig. 1: ein Ausführungsbeispiel eines erfindungsgemäßen Funktionselements,
- Fig. 2a-e: ein Ausführungsbeispiel eines Fittings zum Verbinden mit einem von außen abzudichtenden Rohr mit einem erfindungsgemäßen Funktionselement nach Fig. 1,
- Fig. 3a-b: ein Vergleichsbeispiel eines Fittings ohne Funktionselement.

In der nachfolgenden Beschreibung der verschiedenen erfindungsgemäßen Ausführungsbeispiele werden Bauteile und Elemente mit gleicher Funktion und gleicher Wirkungsweise mit denselben Bezugszeichen versehen, auch wenn die Bauteile und Elemente bei den verschiedenen Ausführungsbeispielen in ihrer Dimension oder Form Unterschiede aufweisen können.

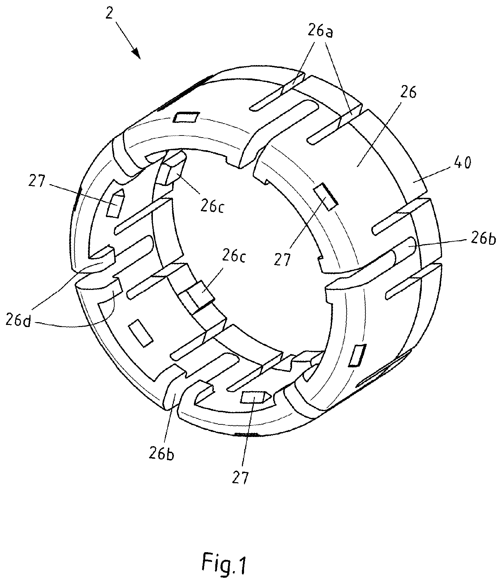

Fig. 1 zeigt zunächst ein Ausführungsbeispiel eines erfindungsgemäßen Funktionselements 2, bei dem der Basiskörper 26 als Funktionsabschnitt 40 einen Kranz aufweist, der aus mit Blähgraphit versetztem vernetztem Polyethylen besteht. Bei diesem Ausführungsbeispiel beträgt der Anteil an Blähgraphit am Material des Funktionsabschnitts 40 25 Gew.-%. Der restliche Basiskörper 26 kann aus demselben vernetzten Polyethylen (ohne Blähgraphit) bestehen oder aus einem anderen Material. Wie oben beschrieben kann auch der gesamte Basiskörper 26 aus vernetztem Polyethylen, das mit Blähgraphit versetzt ist, bestehen.

In dem Basiskörper sind metallische Schneidelemente als Klemmelemente 27 angeordnet. Der Basiskörper weist weiterhin umlaufende Schlitze 26a und 26b auf, die den Basiskörper 26 und somit das Funktionselement 2 insgesamt flexibel machen und die Montage in einem Fitting erleichtern. Zudem kann der Basiskörper 26 dadurch als umlaufend geschlossener Ring ausgebildet sein und leichter beim Verpressen im Radius verringert werden.

Die Klemmelemente 27 sind als Schneidelemente in Form von Drahtelementen ausgeführt, die in dafür vorgesehene Ausnehmungen eingesetzt sind. Die Fixierung der Klemmelemente 27 im Basiskörper 26 erfolgt somit formschlüssig. Die Klemmelemente 27 können in verschiedener Weise hergestellt sein, beispielsweise als Gussteile oder als Stanzteile. Die Anzahl der Klemmelemente 27 ist vorliegend sechs, kann aber je nach Anforderung bzw. Dimension des Basiskörpers 26 festgelegt werden.

Des Weiteren weist der Basiskörper 26 beabstandet zu den Klemmelementen 27 nach innen gerichtete Stege 26c auf, wobei die Stege 26c einen Innenquerschnitt definieren, der gleich groß oder geringfügig kleiner als der Außendurchmesser eines einzusteckenden Rohres 4 ist. Darüber hinaus sind ebenfalls nach innen gerichtete Stege 26d ausgebildet, die ein einzuschiebendes Rohr 4 während des Einschiebens führen.

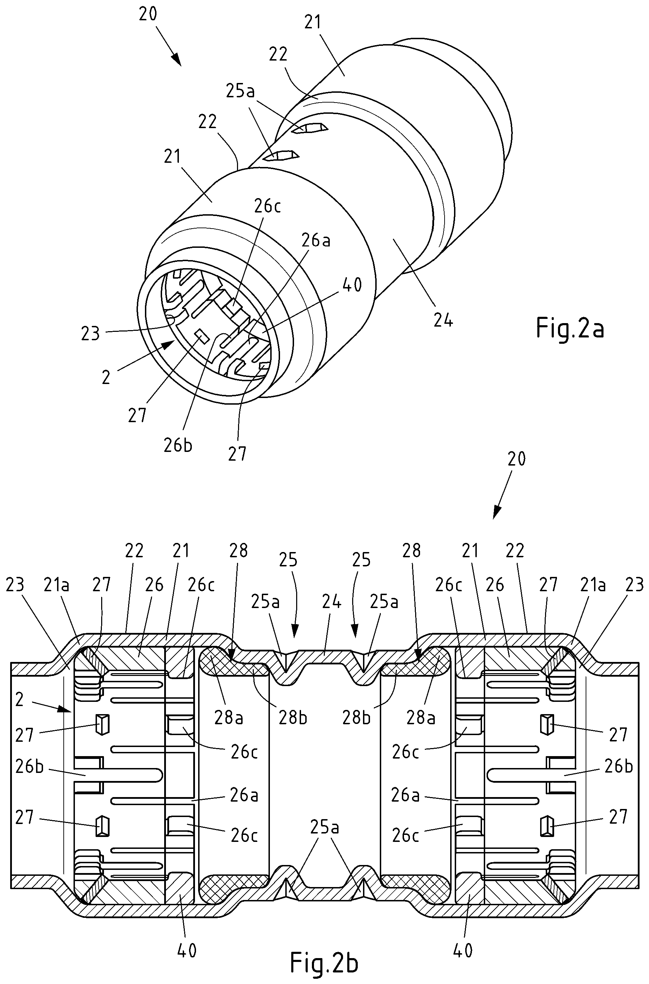

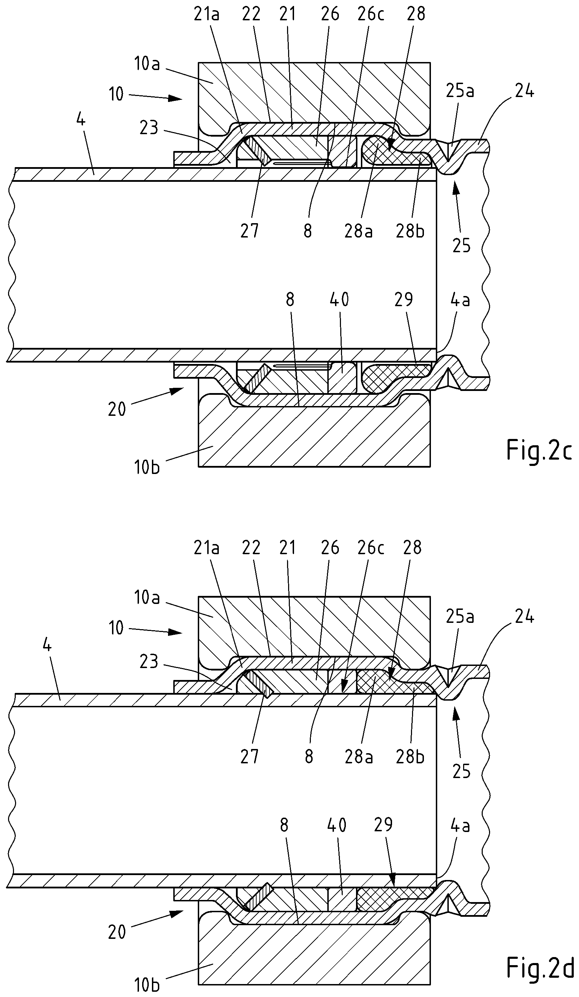

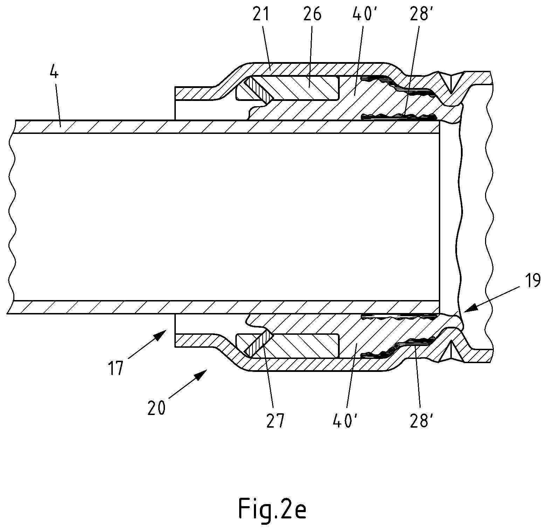

Die Fig. 2a bis 2e zeigen ein Ausführungsbeispiel eines Fittings 20 zum Verbinden mit einem von außen abzudichtenden Rohr 4 mit einem zuvor anhand der Fig. 1 erläuterten Funktionselement 2. Fig. 2a bis 2c zeigen das Fitting 20 im unverpressten Zustand, wogegen Fig. 2d das Fitting 20 im verpressten Zustand zeigt. In Fig. 2e ist das Fitting 20 im verpressten Zustand nach Hitzeeinwirkung dargestellt.

Das Fitting 20 weist einen Grundkörper 24 und ein in dem Grundkörper 24 umfangseitig ausgebildetes und nach innen vorstehendes Anschlagelement 25 auf. Weiterhin ist eine mit dem Grundkörper 24 verbundene und eine Außenkontur 22 bildende Presshülse 21 vorgesehen, die eine nach innen zum aufzunehmenden Rohr 4 hin gerichtete Kammer 23 aufweist. In der Kammer 23 ist ein Funktionselement 2 nach Fig. 1 angeordnet. Zudem ist ein in der Kammer 23 angrenzend an das Anschlagelement 25 angeordnetes Dichtelement 28 mit einem runden Abschnitt 28a und einem eine Lippendichtung bildenden flachen Abschnitt 28b angeordnet.

Die Presshülse 21 ist integral mit dem Grundkörper 24 verbunden, so dass der Pressabschnitt in Form der Presshülse 21 und der Grundkörper 24 in vorteilhafter Weise einteilig hergestellt werden kann. Das Anschlagelement 25 besteht vorliegend aus zwei nach innen gerichteten und sich radial gegenüberliegenden Vertiefungen 25a, die beispielsweise als Körnerpunkte ausgebildet sind. Der Rohranschlag erfolgt somit punktuell und nicht umlaufend, wodurch Toträume vermieden werden, auch wenn ein Rohr 4 eingeschoben ist und die Dichtung 28 im Bereich des Anschlagelementes 25 abdichtet. In Fig. 2b ist für beide Seiten des Fittings 20 jeweils ein Paar von sich radial gegenüber liegenden Körnerpunkten dargestellt, für jede Fittingseite ein Paar.

Die Sicherung des Rohres 4 gegen einen Auszug und/oder gegen einen zu hohen Innendruck erfolgt über das hier als Halteelement dienende Funktionselement 2.

Durch die umlaufenden Schlitze 26a und 26b, die am Basiskörper 26 vorgesehen sind, wird die Montage in dem Fitting 20 innerhalb der Presshülse 21 erleichtert.

Die Klemmelemente 27 des Basiskörpers 26 sind im distalen, den Anschlagelementen 25 gegenüberliegenden Bereich der Kammer 23 angeordnet und nehmen die Auszugskraft auf, indem die Klemmelemente 27 punktuell das Rohr 4 verformen, siehe Fig. 2d, und sich dabei an der Wand in einem distalen äußeren Eckbereich 21a der Presshülse 21 abstützen. Somit ist ein direkter Kraftfluss von dem Rohr 4 über die Presshülse 21 in das Fitting 20 gewährleistet. Das Funktionselement 2 hat nach dem Verpressen lediglich eine stützende Funktion und trägt nur geringfügig oder gar nicht zur Auszugssicherung bei.

Die Stege 26c halten das Rohr 4 im unverpressten Zustand des Fittings 20 entsprechend Fig. 2c, so dass das Rohr 4 nicht aus dem Fitting 20 herausrutschen kann. Zudem bilden die Stege 26c eine Führung des Rohres 4 beim Einschieben in das Fitting 20. Ist der Innenquerschnitt der Innenflächen der Stege 26c geringfügig kleiner als der Außendurchmesser des Rohres 4, so wird dem Rohr 4 beim Einschieben ein geringer Widerstand geboten. Somit erhält der Benutzer beim Einschieben des Rohres 4 ein haptisches Feedback dafür, dass das Rohr 4 in das Fitting eingesteckt ist.

Die Dichtung 28 steht in Kontakt mit dem Funktionsabschnitt 40 und ist als Lippendichtung mit den Abschnitten 28a und 28b ausgebildet und dichtet nach einem Verpressen den Spalt 29 zwischen dem Rohr 4 und der Presshülse 21 bis zum Ende 4a des eingesteckten Rohres 4 ab. Die Dichtung 28 liegt dazu einerseits mit dem runden Abschnitt 28a innerhalb der Kammer 23 an einem schrägen Abschnitt an und wird dadurch positioniert. Der flache Abschnitt 28b ist zwischen der Presshülse 21 und dem einzuschiebenden Rohr 4 angeordnet, was sich insbesondere im verpressten Zustand in Fig. 2d ergibt. Nach dem Verpressen wird somit der Spalt 29 ausgefüllt.

Der Pressvorgang wird durch einen Vergleich der Fig. 2c und 2d deutlich. Die beiden Pressbackenhälften 10a und 10b werden radial nach innen bewegt und durch die Anlage der Presskontur 8 der beiden Pressbackenhälften 10a und 10b wird die Presshülse 21 radial nach innen verformt. Dadurch wird einerseits das Funktionselement mit dem Basiskörper 26 so verformt, dass die Klemmelemente 27 nach innen in das Material des Rohres 4 eindrücken und somit die Fixierung des Rohres 4 mit dem Fitting 20 erreicht wird. Andererseits wird bei der Verformung der Presshülse 21 auch die Dichtung 28 und insbesondere der Abschnitt 28b als Lippendichtung radial nach innen verformt und die Dichtung 28 dichtet den Spalt 29 ab.

Mit dem Dichtelement 28 wird somit ein hohes Maß an Hygiene sichergestellt und Spaltkorrosion vermieden. Darüber hinaus wird eine besonders dichte Verbindung erreicht. Somit werden in Verbindung mit dem punktuellen Rohranschlag 25 Toträume vermieden, in denen sich Medien sammeln können. Die Lippendichtung sorgt weiterhin für die Systemdichtigkeit.

Dieses hohe Maß an Dichtigkeit kann insbesondere im Brandfall, wenn das Fitting für einen längeren Zeitraum unter Hitzeeinwirkung steht, beispielsweise unter einer Temperatureinwirkung von 650 °C für einen Zeitraum von 30 Minuten entsprechend einer HTB-Prüfung, sichergestellt werden. Dies ist in Fig. 2e dargestellt. Durch die Hitzeeinwirkung sind zwischen Presshülse 21 und Rohr 4 Spalte 17, 19 entstanden. Der Spalt 19 wird jedoch durch das um ein Vielfaches in seinem Volumen vergrößerte Material des aufgeblähten oder aufgeschäumten Funktionsabschnitt 40' des Basiskörpers 26' verschlossen, so dass das in dem Rohr 4 geführte Medium nicht aus dem Pressverbund von Rohr 4 und Fitting 20 ausdringen kann. Somit kann im Falle eines im Rohr 4 geführten Gases beispielsweise die Explosionsgefahr im Brandfall verringert oder gar vermieden werden. Im Gegensatz zum Funktionselement 2 mit intumeszierendem Material hält das Dichtelement 28 der Hitzeeinwirkung nicht stand und wird nahezu vollständig zerstört. Lediglich Reste 28' des Dichtelements verbleiben im Spalt 19 zwischen Rohr 4 und Presshülse, können diesen aber nicht verschließen.

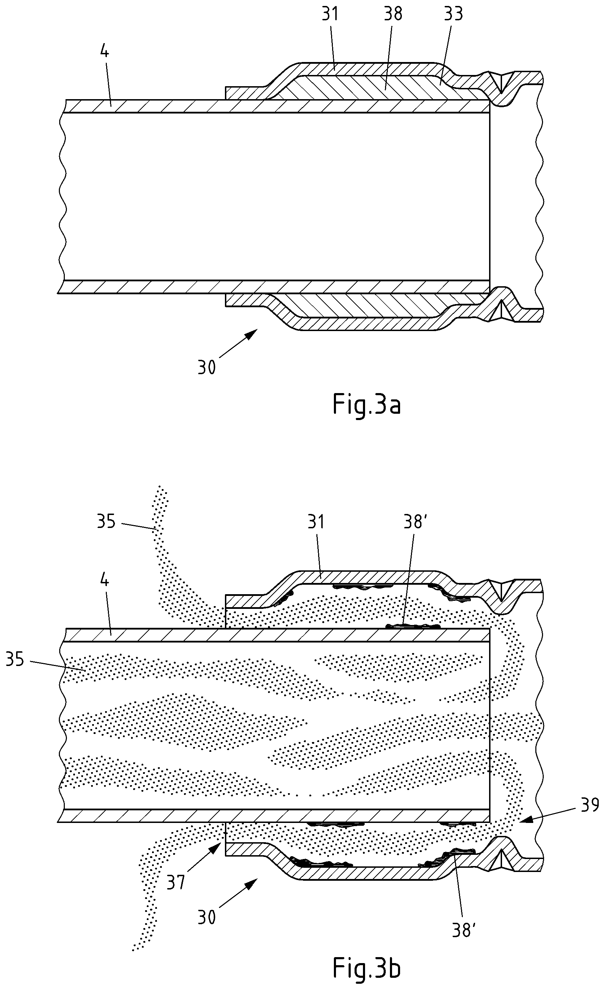

Fig. 3a und 3b zeigen zur Verdeutlichung des Effekts des Funktionselements 2 nach den Fig. 1 und 2 nun ein Fitting 30 ohne Funktionselement, bei dem zwischen Rohr 4 und Presshülse 31 lediglich ein Dichtelement 38 in der Kammer 33 angeordnet ist. Fig. 3a zeigt den verpressten Zustand des Fittings 30 bei Raumtemperatur, wogegen Fig. 3b den verpressten Zustand des Fittings unter Hitzeeinwirkung, beispielsweise bei einer HTB-Prüfung, zeigt. Im verpressten Zustand bei Raumtemperatur gemäß Fig. 3a verschließt das Dichtelement 38 Spalte zwischen Presshülse 31 und Rohr 4, so dass ein fluiddichter Pressverbund aus Rohr 4 und Fitting 30 erreicht wird.

Fig. 3b zeigt, dass durch die Hitzeeinwirkung Spalte zwischen Presshülse 31 des Fittings 30 und dem Rohr entstehen. Es ist ersichtlich, dass unter der Hitzeeinwirkung das Dichtelement 38 im Vergleich zur Fig. 3a nahezu vollständig zerstört ist, so dass lediglich Reste 38' des Dichtelements in den Spalten 37, 39 verbleiben. Diese Reste 38' vermögen die Spalte 37, 39 jedoch nicht mehr abzudichten, so dass das in dem Rohr 4 geführte Medium 35 aus dem Pressverbund von Rohr 4 und Fitting 30 austreten kann, wie in Fig. 3b dargestellt. Durch das Fitting 30 wird somit, im Gegensatz zum Ausführungsbeispiel des erfindungsgemäßen Fittings 20 mit Funktionselement 2 nach den Fig. 1 und 2, im Brandfall ein akutes Sicherheitsrisiko verursacht, vor allem wenn es sich bei dem in dem Rohr 4 geführten Medium 35 um ein explosives Gas handelt.

## Patentansprüche

1. Funktionselement (2) für das Abdichten eines Bauteils (20) bei Temperaturanstieg, mit einem Basiskörper (26), wobei der Basiskörper (26) einen Funktionsabschnitt (40) umfasst oder daraus besteht, wobei der Funktionsabschnitt (40) einen Werkstoff umfasst, wobei der Werkstoff ein intumeszierendes Material und ein thermoplastisches Polymer umfasst, **dadurch gekennzeichnet, dass** das thermoplastische Polymer vernetzt ist.

2. Funktionselement (2) nach Anspruch 1, **dadurch gekennzeichnet, dass** das Funktionselement (2) derart ausgebildet ist, dass durch das Bauteil (20) auf das Funktionselement (2) im eingebauten und/oder in Betrieb befindlichen Zustand anisotrope Kräfte wirken.

3. Funktionselement (2) nach Anspruch 1 oder 2, **dadurch gekennzeichnet, dass** das Bauteil (20) dazu ausgelegt ist, ein Fluid, insbesondere ein Gas zu leiten, das vorzugsweise eine Kraft auf eine mit dem Fluid in Kontakt stehende Seite des Bauteils ausübt.

4. Funktionselement (2) nach Anspruch 2 oder 3, **dadurch gekennzeichnet, dass** der Betrag der durch das Bauteil (20) auf das Funktionselement (2) im eingebauten und/oder in Betrieb befindlichen Zustand wirkenden anisotropen Kräfte größer ist als der Betrag der Gravitationskraft des Bauteils (20).

5. Funktionselement (2) nach einem der Ansprüche 2 bis 4, **dadurch gekennzeichnet, dass** sich durch die durch das Bauteil (20) auf das Funktionselement (2) im eingebauten und/oder in Betrieb befindlichen Zustand wirkenden anisotropen Kräfte ein resultierender Kraftvektor ergibt, der ungleich null ist.

6. Funktionselement (2) nach einem der Ansprüche 2 bis 5, **dadurch gekennzeichnet, dass** durch die anisotropen Kräfte auf das Funktionselement (2) im eingebauten und/oder in Betrieb befindlichen Zustand zumindest eine Scherkraft wirkt.

7. Funktionselement (2) nach einem der vorhergehenden Ansprüche, **dadurch gekennzeichnet, dass** das thermoplastische Polymer einen Formgedächtniseffekt aufweist und bevorzugt im gestreckten Zustand montiert wird.

8. Funktionselement (2) nach einem der vorhergehenden Ansprüche, **dadurch gekennzeichnet, dass** das thermoplastische Polymer Polyethylen ist und/oder der Werkstoff vernetztes Polyethylen umfasst.

9. Funktionselement (2) nach einem der vorhergehenden Ansprüche, **dadurch gekennzeichnet, dass** das intumeszierende Material Blähgraphit ist.

10. Funktionselement (2) nach einem der vorhergehenden Ansprüche, **dadurch gekennzeichnet, dass** der Werkstoff das intumeszierende Material in einer Menge von 10 bis 45 Gew.-%, vorzugsweise 15 bis 40 Gew.-%, weiter bevorzugt 20 bis 35 Gew.-%, enthält, bezogen auf das Gesamtgewicht des Werkstoffs.

11. Funktionselement (2) nach einem der vorhergehenden Ansprüche, **dadurch gekennzeichnet, dass** das Bauteil (20) eine Pressverbindung, insbesondere ein Pressfitting, ist und/oder dass das Funktionselement (2) ein Klemmelement, ein Dichtungselement oder ein Halteelement ist.

12. Verwendung eines Werkstoffs umfassend ein vernetztes thermoplastisches Polymer und ein intumeszierendes Material in einem Funktionselement (2) für ein Bauteil (20) zum Abdichten des Bauteils (20) im Brandfall.

13. Fitting umfassend ein Funktionselement gemäß einem der Ansprüche 1 bis 11.

14. System zum Erstellen einer Leitungsverbindung mit einem Rohr, insbesondere einem Verbundrohr, und mit einem Funktionselement gemäß einem der Ansprüche 1 bis 11, vorzugsweise mit einem ein Fitting nach Anspruch 13.

15. Verwendung eines Funktionselements gemäß einem der Ansprüche 1 bis 11 oder eines Fittings nach Anspruch 13 oder eines Systems nach Anspruch 14 in einer ein Fluid, insbesondere ein Gas, führenden Leitungsanordnung.
